# EUROPÄISCHE PATENTSCHRIFT

(11) **EP 1 724 542 B1**
(45) Veröffentlichungstag und Bekanntmachung des Hinweises auf die Patenterteilung: **07.03.2012**
(21) Anmeldenummer: 06008813.5
(22) Anmeldetag: 27.04.2006
(51) Int. Cl.: F25J 3/02, C01B 31/18, C01B 3/50

(54) **Verfahren und Vorrichtung zur Gewinnung von Produkten aus Synthesegase**
Process and device for the recovery of products from synthesis gas
Procédé et dispositif pour la récupération de produits d'un gaz de synthèse

(30) Priorität: 10.05.2005 DE 102005021530
(43) Veröffentlichungstag der Anmeldung: 22.11.2006
(73) Patentinhaber: Linde AG, 80331 München (DE)
(72) Erfinder: Lang, Martin, 80804 München (DE)

(56) Entgegenhaltungen:
- DE-A1- 4 325 513
- US-A- 4 544 390
- US-A- 4 566 886
- US-A- 4 608 068
- US-B1- 6 173 585
- BERNINGER R: "FORTSCHRITTE BEI DER H2/CO-TIEFTEMPERATURZERLEGUNG PROGRESS IN H2/CO LOW TEMPERATURE SEPARATION" BERICHTE AUS TECHNIK UND WISSENSCHAFT, LINDE AG, UNTERNEHMENSZENTRALE, UNTERNEHMENSKOMMUNIKATION, WIE, DE, Bd. 62, 1988, Seiten 18-32, XP009045782 ISSN: 0942-332X
- FABIAN R: "DERZEITIGER STAND DER H2-CO-ZERLEGUNG MITTELS TIEFTEMPERATURTECHNIK" BERICHTE AUS TECHNIK UND WISSENSCHAFT, LINDE AG. WIESBADEN, DE, Bd. 55, 1984, Seiten 38-42, XP001205714 ISSN: 0942-332X

## Beschreibung

Gegenstand der Erfindung ist ein Verfahren zur Gewinnung eines gasförmigen Kohlenmonoxidproduktstromes durch Zerlegung eines vorwiegend aus Wasserstoff (H₂) und Kohlenmonoxid (CO) bestehenden Einsatzstoffstroms in einer kryogenen Gaszerlegungseinheit mittels Abkühlung durch indirekten Wärmetausch gegen anzuwärmende Verfahrensströme und einstufiger partieller Kondensation mit anschließender Tieftemperaturfraktionierung des bei der partiellen Kondensation gebildeten und in einem Abscheider von der H₂-reichen, CO-haltigen Gasfraktion abgetrennten CO-reichen, H₂-haltigen Kondensats in einer Trennkolonne, der Verdampfung und/oder Anwärmung der kalten Zerlegungsprodukte und der Verdichtung des gasförmigen CO auf Produktdruck mittels eines bevorzugt mehr als eine Verdichtersektion aufweisenden CO-Verdichters, wobei das Flüssig-CO aus dem Sumpf der Trennkolonne abgezogen und entspannt wird und die bei der Entspannung entstandenen flüssigen und gasförmigen Fraktionen in zumindest einem Wärmetauscher durch indirekten Wärmetausch gegen abzukühlende Verfahrensströme verdampft und angewärmt bzw. nur angewärmt und gasförmig dem CO-Verdichter zugeführt werden.

Weiterhin betrifft die Erfindung eine Vorrichtung zur Durchführung des Verfahrens.

Durch unterschiedliche Erzeugungsmethoden, wie z. B. katalytische Dampfreformierung oder Partielle Oxidation, werden aus kohlenwasserstoffhaltigen Ausgangsstoffen, wie Erdgas, Flüssiggas, Naphta, Schweröl oder Kohle, sog. Synthesegas erzeugt, das zum größten Teil aus H₂ und CO besteht, aber auch Methan (CH₄), Wasser (H₂O), Kohlendioxid (CO₂) und andere Komponenten, wie z. B. Stickstoff und Argon enthält. Aus dem Synthesegas werden nach Reinigung und Zerlegung vor allem CO und H₂ als Produkte gewonnen, die in der Industrie in vielfältiger Weise Verwendung finden.

Zur Trennung und Reinigung der beiden Synthesegaskomponenten H₂ und CO werden in Industrieanlagen vor allem kryogene Verfahren eingesetzt. Voraussetzung für die Anwendbarkeit dieser Prozesse ist, dass der der kryogenen Gaszerlegungseinheit zugeführte Einsatzstoffstrom frei ist von Wasser, CO₂ und anderen Verbindungen, die bei den auftretenden niedrigen Temperaturen zur Feststoffbildung, und damit zu einer Verlegung der Wärmetauscher führen würden. Das Synthesegas wird daher einer aus mehreren Schritten bestehenden Reinigung unterzogen, bei der der größte Teil der unerwünschten Stoffe in einer CO₂-Wäsche entfernt wird. Von den verbliebenen Resten wird das Synthesegas in einer sich anschließenden Adsorberstation gereinigt.

Die eingesetzten kryogenen Verfahren sind - je nach der Zusammensetzung des zu trennenden Einsatzstoffstromes und der geforderten Reinheit der Produkte - unterschiedlich in ihrer Art (Kondensationsprozess oder Methanwäsche) und Komplexität. Soll beispielsweise aus einem Einsatzstoffstrom, der durch die Vergasung von Schweröl mittels Partieller Oxidation gewonnen wird, und der nach Trocknung und Kohlendioxidentfernung zu etwa 50% aus CO bzw. H₂ und zu 0,2% aus Methan besteht, ein CO-Produkt erzeugt werden, das den Anforderungen der Essigsäureproduktion genügt, ist es ausreichend, ein einstufiges Kondensationsverfahren mit anschließender H₂-Abtrennung anzuwenden, da lediglich durch die Entfernung des Wasserstoffs aus dem Gasgemisch eine CO-Produktreinheit von >99% erreicht wird. Eine zusätzliche CH₄-Abtrennung ist deshalb nicht notwendig.

Bei diesem Verfahren wird der Einsatzstoffstrom in die kryogene Gaszerlegungseinheit (üblicherweise werden die Apparate der kryogenen Gaszerlegungseinheit in einer wärmeisolierten Einhausung (Cold-Box) angeordnet) geleitet und im Gegenstrom im indirekten Wärmetausch gegen anzuwärmende Verfahrensströme so weit abgekühlt, dass es zu einer Teilkondensation kommt, bei der sich eine CO-reiche Flüssigfraktion und eine H₂-reiche Gasfraktion bilden, die anschließend in einem Abscheider getrennt werden. Die CO-reiche Flüssigkeit, in der noch H₂ gelöst ist, wird nachfolgend einer Trennkolonne (z. B. einer H₂-Strippkolonne) zugeführt, in der H₂ weitgehend abgetrennt wird, so dass am Kolonnensumpf Flüssig-CO mit der geforderten Produktreinheit vorliegt.

Um die für die partielle Kondensation notwendige Temperatur am Abscheider zu erreichen, wird nach dem Stand der Technik, wie er beispielsweise aus der Veröffentlichung "Fortschritte bei der H2/CO-Tieftemperaturzerlegung" (R. Beminger, in Linde Berichte aus Wissenschaft und Technik, Nr. 62, 1988, S. 18-32) bekannt ist, das Flüssig-CO aus dem Sumpf der Trennkolonne entnommen und kälteleistend entspannt. Durch die Entspannung, bei der ein Teil des Flüssig-CO in die Gasphase übergeht, wird die Temperatur weit genug abgesenkt, um im indirekten Wärmetausch (zusammen mit anderen anzuwärmenden Verfahrensströmen) den Einsatzstoffstrom auf die notwendige Temperatur abzukühlen. Das entspannte Flüssig-CO wird gegen die abzukühlenden Verfahrensströme vollständig verdampft und angewärmt. Ein Verdichter bringt das CO anschließend auf den geforderten Produktdruck, bevor es an der Anlagengrenze als CO-Produkt abgegeben wird.

Im Bestreben, die Zerlegung des Einsatzstoffstromes mit Hilfe des Kondensationsprozesses auf möglichst wirtschaftliche Weise durchzuführen, wird der Flüssig-CO-Strom in mindestens zwei Teilströme zerlegt und der CO-Verdichter u. U. mit mehreren Sektionen ausgeführt. Jeder der Teilströme wird kälteleistend entspannt und nach Verdampfung und Anwärmung gasförmig einer anderen Sektion des Verdichters auf deren Saugseite zugeführt. Wenn es die Druckverhältnisse erlauben, kann einer der Teilströme auf den Druck des CO-Produktes entspannt und direkt in dieses eingespeist werden. Die Größe der Teilströme wird bestimmt durch die Forderung, einen möglichst großen Anteil des CO gasförmig dem Verdichter auf möglichst hohem Druckniveau zuzuführen, um eine minimale Verdichterleistung zu erreichen. Gleichzeitig muss ausreichend Flüssig-CO auf niedrigem Druckniveau zur Verfügung gestellt werden, um die Abkühlung des Einsatzstoffstromes auf die gewünschte Temperatur zu ermöglichen.

Aufgabe der vorliegenden Erfindung ist es, ein Verfahren der eingangs genannten Art so zu gestalten, dass die Wirtschaftlichkeit einer CO-Gewinnung nach dem oben beschriebenen Prinzip im Vergleich zum Stand der Technik erhöht ist.

Diese Aufgabe wird verfahrensseitig erfindungsgemäß dadurch gelöst, dass das Flüssig-CO aus dem Sumpf der Trennkolonne kaskadenartig entspannt wird, wobei nach jeder Teilentspannung der CO-Strom in eine flüssige und eine gasförmige Fraktion getrennt und ein Teil der flüssigen Fraktion zur nächsten Kaskadenstufe weitergeleitet und dort auf ein kleineres Druckniveau entspannt wird, während der andere Teil der flüssigen und die gesamte gasförmige Fraktion dem Wärmetauscher oder direkt dem CO-Produktstrom zugeführt werden.

Eine bevorzugte Ausgestaltung des erfindungsgemäßen Verfahrens sieht vor, dass jeder der CO-Ströme aus den Kaskadenstufen dem CO-Verdichter gasförmig an der Saugseite einer jeweils anderen Sektion aufgegeben wird und gleichzeitig jeder der dem CO-Verdichter an der Saugseite einer Sektion aufgegebenen gasförmigen CO-Ströme aus einer jeweils anderen Kaskadenstufe zugeführt wird.

In der ersten Kaskadenstufe wird der gesamte Flüssig-CO-Strom aus dem Sumpf der Trennkolonne entspannt. Das dabei entstehende Flüssigkeits-Gas-Gemisch wird aufgrund des Joule-Thomson-Effektes abgekühlt und in einem Abscheider in eine Flüssig- und eine Gasfraktion getrennt. Die Gas- und zumindest ein Teil der Flüssigfraktion werden gegen abzukühlende Verfahrensströme angewärmt (wobei die Flüssigfraktion verdampft) und auf der Saugseite einer Sektion dem CO-Verdichter zugeführt. Wenn ein niedriger Abgabedruck für das CO-Produkt verlangt wird, d. h. wenn ein Druckgefälle zwischen dem CO aus dem Sumpf der Trennkolonne und dem CO-Produkt vorhanden ist, sieht eine weitere Ausgestaltung des erfindungsgemäßen Verfahrens vor, dass die erste Entspannung vorzugsweise auf ein Druckniveau erfolgt, das so gewählt wird, dass das CO nach Verdampfung und/oder Anwärmung gasförmig ohne weitere Verdichtung in das CO-Produkt eingespeist werden kann. Vorraussetzung ist, dass die Verdampfung bei hohem Druck gegen die abzukühlenden Verfahrensströme möglich ist und ausreichend Flüssig-CO für die folgenden Kaskaden zur Verfügung steht, so dass das Synthesegas auf die gewünschte Temperatur abgekühlt werden kann.

Wird die Trennkolonne bei geringem Druck betrieben, so sieht eine nicht-erfindungsgemäße Ausgestaltung des Verfahrens vor, dass ein Teilstrom des Flüssig-CO direkt ohne Entspannung abgezogen, verdampft, angewärmt und dem CO-Verdichter zugeführt oder direkt in den CO-Produktstrom eingespeist wird.

Der kaskadenartige Entspannungsprozess wird zweckmäßigerweise solange fortgesetzt, bis das Druckniveau, auf das in der letzten Kaskadenstufe entspannt wird, dem Saugdruckniveau der ersten Sektion des CO-Verdichters (zuzüglich der Druckverluste in den Wärmetauscherpassagen und den Rohrleitungen) entspricht. In dieser letzen Stufe wird die tiefste Temperatur in der Entspannungskaskade erreicht. Um die CO-Fraktionen, die jeweils flüssig und gasförmig aus jeder der Kaskadenstufe abgezogen und zum CO-Verdichter geleitet werden, zu verdampfen und anzuwärmen, werden sie bevorzugt separat in einen Wärmetauscher, der zweckmäßiger Weise als Plattenwärmetauscher ausgeführt ist, eingespeist und intern gemischt, um eine Fehlverteilung zu verhindern. Die Verdampfung und Anwärmung erfolgt in einer gemeinsamen Passage gegen abzukühlende Verfahrensströme; eine Verdampfung und/oder Anwärmung der Gas- und Flüssigfraktion in separaten Passagen ist ebenfalls möglich, jedoch apparativ aufwendiger.

Die Größe der Flüssig-CO-Ströme, die von einer Stufe der Entspannungskaskade zur nächsten geführt werden, wird durch die gewünschte Abkühlung des Einsatzstoffstromes vorgegeben. Entsprechend der Abkühlkurve des Einsatzstoffstromes wird gerade so viel Flüssig-CO auf die tieferen Druckniveaus geführt, dass die gewünschte Temperatur am Abscheider erreicht wird. Der Hauptvorteil des Verfahrens liegt darin, dass die bei den Entspannungen entstehenden Gasfraktionen, die im Vergleich zu den Flüssigfraktionen, die verdampft werden müssen, nur einen geringen Beitrag zur Abkühlung des Einsatzstoffstroms leisten, immer auf möglichst hohem Druckniveau dem Verdichter zugeführt werden, wodurch der Energiebedarf des Verdichters minimiert wird.

Um die CO-Ausbeute zu erhöhen, sieht eine weitere Ausgestaltung des erfindungsgemäßen Verfahrens vor, die bei der partiellen Kondensation entstandene H₂-reiche, CO-haltige Gasfraktion aus dem Abscheider zu führen, gegen abzukühlende Verfahrensströme anzuwärmen und in eine nicht zur kryogenen Gaszerlegungseinheit gehörenden Membraneinheit, wie sie dem Fachmann hinreichend bekannt ist, zu leiten, wo der Wasserstoff als sog. Permeat aus dem Gasgemisch weitgehend abgetrennt wird. Das restliche CO/H₂-Gemisch (Retentat) wird zur Erhöhung der CO-Ausbeute in die kryogene Gaszerlegungseinheit zurückgeführt.

Das Retentat wird in der kryogenen Gaszerlegungseinheit bevorzugt gegen anzuwärmende Verfahrensströme abgekühlt und direkt der Trennkolonne, die bevorzugt als H₂-Strippkolonne ausgeführt ist, aufgegeben, wo es nach Abtrennen des Wasserstoffs im Sumpf der Kolonne aufgefangen wird und dort die Menge des Flüssig-CO mit Produktreinheit vergrößert. Ein zusätzlicher Abscheider, wie er z. B. in DE 43 25 513 A1 beschrieben wird, kann entfallen.

Wird der Einsatzstoffstrom aus einem Synthesegas durch Reinigung in einer Adsorberstation gewonnen, sieht eine weitere Ausgestaltung des erfindungsgemäßen Verfahrens vor, zumindest einen Teil des Permeats zur Regenerierung der Adsorber in der Adsorberstation zu verwenden. Zur Erzeugung von Reinwasserstoff wird der Permeatstrom bevorzugt in einer nachgeschalteten Druckwechseladsorptionsanlage (DWA) gereinigt, bevor er an der Anlagengrenze als Produkt abgegeben wird.

Am Kopf der Trennkolonne wird ein H₂-reiches, CO-haltiges Gas (Flash-Gas) abgezogen, dessen Reinheit nicht den Anforderungen entspricht, die üblicherweise an ein Wasserstoffprodukt gestellt werden. Deshalb wird das Flash-Gas erfindungsgemäß gegen abzukühlenden Verfahrensströme angewärmt, bevorzugt in das aus der Membraneinheit kommende Permeat eingespeist und in der nachfolgenden Druckwechseladsorptionsanlage auf Produktqualität gereinigt, wodurch die H₂-Ausbeute erhöht wird.

Für den Fall, dass der Druck des Flash-Gases zur Einspeisung in das Permeat nicht ausreicht, wird er zweckmäßig mittels eines Verdichters auf einen geeignet hohen Wert angehoben.

Zur Regenerierung der Adsorber in der Adsorberstation wird ein Regeneriergas entgegen der Strömungsrichtung des zu reinigenden Rohgases durch die Adsorber geleitet. Stoffe, die während der Reinigungsphase aus dem Rohgasgemisch adsorbiert wurden, werden nun desorbiert und mit dem Regeneriergas aus der Adsorberstation ausgetragen. Anschließend stehen die regenerierten Adsorber wieder für die Rohgasreinigung bereit.

Die Selektivität der eingesetzten Adsorptionsmittel ist zwar hoch, jedoch wird neben den unerwünschten Stoffen auch CO - wenn auch in geringerem Maß - co-adsorbiert und aus dem Rohgas entfernt. Ist der Partialdruck des Kohlenmonoxids im Regeneriergas geringer als im Rohgas, wird ein Teil des adsorbierten CO bei der Regenerierung desorbiert. Da in der nächsten Adsorptionsphase (Reinigung des Rohgases) wieder CO aus dem Rohgas adsorbiert wird, kann eine solchermaßen durchgeführte Adsorberregenerierung zu Schwankungen der Zusammensetzung des in die kryogene Gaszerlegungseinheit eintretenden Einsatzstoffstromes und folglich auch der an der Anlagengrenze abgegebenen Produktmengen führen.

Handelt es sich bei dem Rohgas um ein Synthesegas, so treten bei dieser Verfahrensweise die oben beschriebenen negativen Erscheinungen auf, da der CO-Gehalt des Permeats aus der Membraneinheit mit ca. 1,5mol-% wesentlich niedriger liegt, als der CO-Gehalt des Synthesegases. Nach einer Ausgestaltung des erfindungsgemäßen Verfahrens wird vorgeschlagen, das CO-haltige Flash-Gas (CO-Gehalt ca. 20mol-%) vor seiner Einspeisung in das Permeat für die Vorbeladung der Adsorber mit CO zu verwenden, um so den CO-Einbruch im Einsatzstoffstrom beim Umschalten der Adsorber der Adsorberstation zu reduzieren.

Bei hohem Druck und CO-Gehalt des Einsatzstoffstromes reicht die durch den Joule-Thomson-Effekt erzeugte Kälte aus, um den Kältebedarf der kryogenen Gaszerlegungseinheit zu decken. Bei niedrigem Rohgasdruck und/oder geringem CO-Gehalt ist es notwendig, zusätzlich Kälte in den Prozess einzubringen.

Eine weitere Ausgestaltung des erfindungsgemäßen Verfahrens sieht vor, zur Deckung des Kältebedarfs der kryogenen Gaszerlegungseinheit flüssigen Stickstoff (N₂) von jenseits der Anlagengrenzen einzubringen, gegen abzukühlende Verfahrensströme zu verdampfen, anzuwärmen und in die Atmosphäre abzugeben. Bevorzugt wird der Stickstoff zur Spülung der sog. Cold-Box, in der die kryogene Gaszerlegungseinheit untergebracht ist, verwendet, bevor er in die Atmosphäre abgegeben wird.

Für den Fall, dass der Kältebedarf der kryogenen Gaszerlegungseinheit die durch den Joule-Thomson-Effekt erzielbare Kälteleistung sehr stark übersteigt, d. h. der Bedarf an flüssigem Stickstoff von jenseits der Anlagengrenzen sehr hoch ist, wird zweckmäßigerweise der Flüssig-N₂ durch einen Wärmetauscher geführt, der sich in demjenigen Abscheider befindet, in welchem das Flüssigkeits-Gas-Gemisch nach der einstufigen partiellen Kondensation des Einsatzstoffstromes getrennt wird. Die H₂-reiche, CO-haltige Gasfraktion wird gegen den flüssigen Stickstoff weiter abgekühlt und ein Teil des enthaltenen CO auskondensiert, wodurch sich die CO-Ausbeute des einstufigen Kondensationsprozesses erhöht.

Wird der Einsatzstoffstrom aus einem Synthesegas gewonnen, so ist eine CO₂-Wäsche vorhanden, in welcher das Synthesegas einer Grobreinigung unterzogen wird. Falls aus dem Synthesegas ein H₂-Produkt mit einem so hohen Druck gewonnen werden soll, dass kein Druckgefälle für den Betrieb einer Membraneinheit zur Verfügung steht, sieht eine weitere Ausgestaltung des erfindungsgemäßen Verfahrens vor, die H₂-Fraktion aus dem Abscheider, in welchem das Flüssigkeits-Gas-Gemisch nach der partiellen Kondensation des Einsatzstoffstromes getrennt wird, nach Anwärmung gegen abzukühlende Verfahrensströme zur Adsorberregenerierung zu verwenden und anschließend direkt in einer Druckwechseladsorptionsanlage auf Produktqualität zu reinigen. Das CO-haltige Restgas aus der Druckwechseladsorptionsanlage wird mittels Verdichter (Recycleverdichter) vor die CO₂-Wäsche zurückgeführt und in das Synthesegas eingespeist. Bei dieser Konfiguration wird bevorzugt auch das Flash-Gas aus der Trennkolonne, nach Anwärmung gegen abzukühlende Verfahrensströme, vor die CO₂-Wäsche zurückgeführt. Da der Druck des Flash-Gases in der Regel deutlich höher ist als der Druck des DWA-Restgases, erfolgt die Rückführung bevorzugt über eine Zwischeneinspeisung am Recycleverdichter (falls dieser mehrstufig ausgeführt wird). Auf diese Weise erhöhen sich H₂- und CO-Ausbeute des Verfahrens auf annähernd 100%.

Die Erfindung betrifft ferner eine Vorrichtung zur Gewinnung eines gasförmigen Kohlenmonoxidproduktes durch Zerlegung eines vorwiegend aus Wasserstoff (H₂) und Kohlenmonoxid (CO) bestehenden Einsatzstoffstromes, bestehend aus einer kryogenen Gaszerlegungseinheit, die neben Leitungen zur Führung der Verfahrensströme zumindest einen Wärmetauscher, in dem der Einsatzstoffstrom gegen anzuwärmende Verfahrensströme abgekühlt und partiell kondensiert wird, eine zwischen Trennkolonne, in der das bei der partiellen Kondensation gebildete und in einem Abscheider von der H₂-reichen, CO-haltigen Gasfraktion abgetrennte CO-reiche, H₂-haltige Kondensat einer Tieftemperaturfraktionierung unterzogen wird, eine zwischen dem Sumpf der Trennkolonne und der kalten Seite des Wärmetauschers angeordnete Einrichtung zur Entspannung des Flüssig-CO aus dem Sumpf der Trennkolonne und der Einleitung der bei der Entspannung entstandenen flüssigen und gasförmigen Fraktionen in den Wärmetauscher, in welchem sie durch indirekten Wärmetausch gegen abzukühlende Verfahrensströme verdampf- und anwärmbar bzw. nur anwärmbar sind sowie einen bevorzugt mehr als eine Verdichtersektion aufweisenden CO-Verdichter zur Verdichtung des gasförmigem CO auf Produktdruck umfasst.

Vorrichtungsseitig wird die gestellte Aufgabe erfindungsgemäß dadurch gelöst, dass zwischen dem Sumpf der Trennkolonne, die vorzugsweise als H₂-Strippkolonne ausgeführt ist, und der kalten Seite des Wärmetauschers eine Einrichtung zur kaskadenartigen Entspannung des Flüssig-CO aus dem Sumpf der Trennkolonne vorgesehen ist, wobei die Stufen der Kaskade jeweils ein einstellbares Drosselorgan und einen Abscheider zur Trennung, der bei der Entspannung des Flüssig-CO über das Drosselorgan entstehenden Flüssigkeits-Gas-Gemisches aufweisen, und die Stufen so verschaltet sind, dass ein Teil der Flüssigfraktion aus dem Abscheider zur nächsten Kaskadenstufe weiterleitbar ist, während der restliche Teil der Flüssigfraktion und die gesamte Gasfraktion dem Wärmetauscher bevorzugt auf seiner kalten Seite bei einem geeigneten Temperaturniveau zuführbar sind, wo sie gegen abzukühlende Verfahrensströme verdampft und angewärmt werden, bevor sie gasförming dem CO-Verdichter oder direkt dem CO-Produktstrom zugeführt werden.

Bevorzugt besteht die Entspannungskaskade aus wenigstens zwei, und maximal n+1 Kaskadenstufen, wenn n die Anzahl der Sektionen des CO-Verdichters ist. Zumindest bei der Ausführung mit n+1 Kaskadenstufen, wird das aus der ersten Kaskadenstufe abgezogene CO gasförmig ohne weitere Verdichtung in den CO-Produktstrom eingeleitet.

Die Verteilung des Flüssig-CO auf die Kaskadenstufen ist erfindungsgemäß über die Drosselorgane so einstellbar, dass die gewünschte Abkühlung des Einsatzstoffstromes erreicht und gleichzeitig die Verdichterleistung minimiert wird.

Ist ein ausreichend hohes Druckgefälle zwischen der bei der partiellen Kondensation des Einsatzstoffstromes gewonnenen H₂-reichen, CO-haltigen Gasfraktion und dem Wasserstoffprodukt vorhanden, so weist die erfindungsgemäße Vorrichtung zur Steigerung der CO-Ausbeute zweckmäßigerweise eine außerhalb der kryogenen Gaszerlegungseinheit angeordnete Membraneinheit auf, in welcher der Wasserstoff aus der bei der partiellen Kondensation gewonnenen H₂-reichen, CO-haltigen, gegen abzukühlende Verfahrensströme angewärmten Gasfraktionen weitgehend abtrennbar ist. Das verbleibende CO/H₂-Gemisch (Retentat), ist zur Erhöhung der CO-Ausbeute in die kryogene Zerlegungseinheit rückführbar. Ist zur Erzeugung des Einsatzstoffstromes (z. B. aus einem Synthesegas) eine Adsorberstation vorhanden, wird der in der Membraneinheit abgetrennte Wasserstoff (Permeat) bevorzugt so weiter geführt, dass mit ihm die Adsorber der Adsorberstation regenerierbar sind.

Eine andere Ausgestaltung der erfindungsgemäßen Vorrichtung sieht einen Verdichter vor, mit dem der Druck des gegen abzukühlende Verfahrensströme angewärmten, vom Kopf der Trennkolonne abgezogenen H₂-reichen, CO-haltigen sog. Flash-Gases soweit anhebbar ist, dass es in das Permeat einspeisbar ist.

Ist kein ausreichend hohes Druckgefälle zwischen der bei der partiellen Kondensation gewonnenen H₂-reichen, CO-haltigen Gasfraktionen und dem Wasserstoffprodukt vorhanden und soll neben CO auch Reinwasserstoff als Produkt hergestellt werden, so weist die Vorrichtung bevorzugt eine Druckwechseladsorptionsanlage (DWA) auf, in der die aus der kryogenen Gaszerlegungseinheit kommende H₂-Fraktion reinigbar ist. Durchläuft das zu trennende Gas eine CO₂-Wäsche, bevor es als Einsatzstoffstrom in die kryogene Zerlegungseinheit geleitet wird, so ist das CO-haltige Restgas aus der DWA sowie das H₂-reiche, CO-haltige Flash-Gas zweckmäßig in das Rohgas vor die CO₂-Wäsche rückführbar. Hierzu ist die erfindungsgemäße Vorrichtung mit einem Verdichter ausgestattet, mit dem die Drücke des DWA Restgases und des Flash-Gases auf den für die Rückführung notwendigen Wert anhebbar sind.

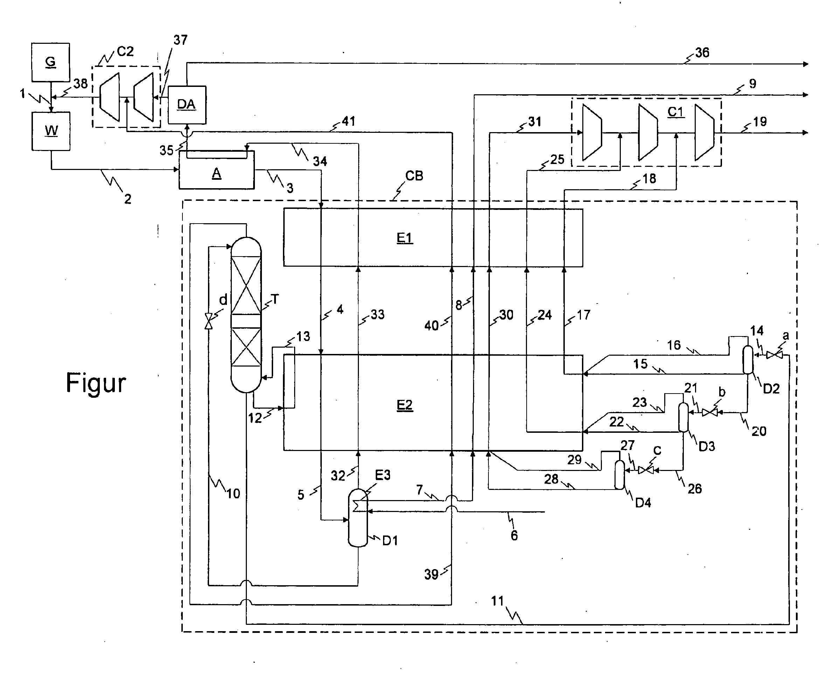

Im Folgenden soll die Erfindung anhand eines in der Figur dargestellten Ausführungsbeispiels näher erläutert werden:

Das vorliegende Ausführungsbeispiel betrifft ein Verfahren zu kryogenen Gewinnung eines CO- und eines H₂-Produktes aus einem Synthesegasstrom, wobei ein CO-Verdichter mit drei Sektionen zur Erzeugung des CO-Produktdruckes eingesetzt wird. Der CH₄-Gehalt des Synthesegases ist so gering, dass auf eine CH₄-Entfernung aus dem CO-Produkt verzichtet werden kann.

Aus dem Gaserzeuger G strömt das Synthesegas über die Leitung 1 in die CO₂-Wäsche W, wo es zum größten Teil von CO₂, aber auch von Wasser und anderen unerwünschten Stoffen gereinigt wird. Das vorgereinigte Synthesegas gelangt über die Leitung 2 in die Adsorberstation A und wird hier von den noch verbliebenen Resten an Wasser und CO₂ befreit. Anschließend wird das gereinigte Synthesegas als Einsatzstoffstrom über die Leitung 3 in die in der Cold-Box CB untergebrachte kryogene Gaszerlegungseinheit geleitet, wo es zunächst im Wärmetauscher E1 und anschließend im Wärmetauscher E2, den es über Leitung 4 erreicht, abgekühlt wird. Im Wärmetauscher E2 entsteht aus dem Einsatzstoffstrom durch Kondensation ein Phasengemisch, das über Leitung 5 dem Abscheider D1 zugeleitet und dort in eine vorwiegend aus CO bestehende Flüssig- und eine H₂-reiche, CO-haltige Gasfraktion getrennt wird. Die Menge der Flüssigfraktion in D1, wird durch das aus der Gasfraktion im Wärmetauscher E3 auskondensierte CO vergrößert. Der Wärmetauscher E3 ist in den Abscheider D1 integriert und wird mittels Flüssigstickstoff gekühlt, der über Leitung 6 von jenseits der Anlagengrenzen zugeführt wird. Über die Leitungen 7 und 8 wird der Stickstoff zu den Wärmetauschern E2 und E1 geführt und gegen abzukühlende Verfahrensströme angewärmt, bevor er über Leitung 9 die Anlage in die Atmosphäre verlässt.

Die CO-reiche Flüssigfraktion wird aus dem Abscheider D1 über die Leitung 10 und das Ventil d auf den Kopf der H₂-Strippkolonne T aufgegeben, wo der noch in ihr gelöste Wasserstoff zum größten Teil ausgestrippt wird. Die CO-reiche Flüssigkeit, die bereits Produktqualität aufweist, wird am Sumpf der H₂-Strippkolonne T gesammelt und von dort über die Leitung 11 der Entspannungskaskade zugeführt. Die H₂-Strippkolonne T wird über einen im Wärmetauscher E2 integrierten Reboiler, mit dem sie über die Leitungen 12 und 13 verbunden ist, beheizt.

Der gesamte Flüssig-CO-Strom wird über die Drosselstelle a auf den Eintrittsdruck der Mitteldruckstufe des CO-Verdichters C1 (zuzüglich der Druckverluste der Wärmetauscher E1 und E2 sowie der Rohrleitungen) entspannt, wobei sich der Strom abkühlt und ein Teil gasförmig anfällt. Das Flüssigkeits-Gas-Gemisch wird über die Leitung 14 dem Abscheider D2 zugeleitet und dort in eine Flüssig- und eine Gasfraktion getrennt. Ein Teil der Flüssig- und die gesamte Gasfraktion werden über die Leitungen 15 und 16 aus dem Abscheider D2 entnommen und der kalten Seite des Wärmetauscheres E2 zugeführt, wo die Flüssigfraktion 15 verdampft und gemeinsam mit der Gasfraktion 16 angewärmt wird. Der nun vollständig gasförmige CO-Strom wird über Leitung 17 zum Wärmetauscher E1 geleitet, dort weiter angewärmt, über Leitung 18 dem CO-Verdichter C1 auf dessen Mitteldruckschiene aufgegeben, mit dem CO aus den beiden ersten Sektionen des CO-Verdichters C1 gemischt, auf Produktdruck verdichtet und über Leitung 19 als CO-Produkt abgegeben.

Der andere Teil der Flüssigfraktion aus dem Abscheider D2 wird über Leitung 20 zur Drosselstelle b geleitet und auf den Eintrittsdruck der Niederdruckstufe des CO-Verdichters C1 (zuzüglich der Druckverluste der Wärmetauscher E1 und E2 sowie der Rohrleitungen) entspannt, wobei sich auch hier der Strom abkühlt und ein Teil gasförmig anfällt. Das Flüssigkeits-Gas-Gemisch wird über die Leitung 21 dem Abscheider D3 zugeleitet und dort in eine Flüssig- und eine Gasfraktion getrennt. Ein Teil der Flüssig- und die gesamte Gasfraktion werden über die Leitungen 22 und 23 aus dem Abscheider D3 entnommen und der kalten Seite des Wärmetauscheres E2 zugeführt, wo die Flüssigfraktion 22 verdampft und gemeinsam mit der Gasfraktion 23 angewärmt wird. Der nun vollständig gasförmige CO-Strom wird über Leitung 24 zum Wärmetauscher E1 geleitet, dort weiter angewärmt, über Leitung 25 dem CO-Verdichter C1 auf dessen Niederdruckschiene aufgegeben, mit dem CO aus der ersten Verdichtersektion gemischt, auf das Mitteldruckniveau verdichtet und schließlich zusammen mit dem gasförmigen CO-Strom 18, mit dem es in der letzten Verdichtersektion auf Produktdruck verdichtet wird, über Leitung 19 als CO-Produkt abgegeben.

In der letzten Stufe der Entspannungskaskade wird die restliche Flüssigfraktion aus dem Abscheider D3 über Leitung 26 zur Drosselstelle c geführt und auf den Ansaugdruck der des CO-Verdichters C1 (zuzüglich der Druckverluste der Wärmetauscher E1 und E2 sowie der Rohrleitungen) entspannt, wobei die Spitzenkälte für das kalte Ende des Wärmetauschers E2 erzeugt wird. Das Flüssigkeits-Gas-Gemisch wird über die Leitung 27 dem Abscheider D4 zugeleitet und dort in eine Flüssig- und eine Gasfraktion getrennt. Die gesamte Flüssig- und die Gasfraktion werden über die Leitungen 28 und 29 aus dem Abscheider D4 entnommen und der kalten Seite des Wärmetauscheres E2 zugeführt, wo die Flüssigfraktion 28 verdampft und gemeinsam mit der Gasfraktion 29 angewärmt wird. Der nun vollständig gasförmige CO-Strom wird über Leitung 30 zum Wärmetauscher E1 geleitet, dort weiter angewärmt, über Leitung 31 dem CO-Verdichter C1 auf dessen Saugseite aufgegeben, auf Niederdruckniveau verdichtet, zusammen mit den beiden anderen CO Strömen 25 und 18 in den beiden folgenden Verdichtersektionen auf Produktdruck verdichtet und über Leitung 19 als CO-Produkt abgegeben.

Zu den beiden unteren Druckstufen wird jeweils nur soviel Flüssigkeit weitergeleitet, um die gewünschte Abkühlung des Einsatzstoffstromes 5 in E2 zu erreichen. Aufgrund der kaskadenartigen Entspannung des Flüssig-CO-Stromes 11 werden die in den Kaskadenstufen anfallenden Gasfraktionen immer auf möglichst hohem Druckniveau dem CO-Verdichter C1 zugeführt. Im Vergleich zum Stand der Technik wird der Energiebedarf des CO-Verdichters dadurch erheblich reduziert.

Die bei der partiellen Kondensation des Einsatzstoffstromes gebildete H₂-reiche, CO-haltige Gasfraktion wird aus dem Abscheider D1 abgezogen, in den beiden Wärmetauschern E2 und E1, denen sie über die Leitungen 32 und 33 zugeführt wird, angewärmt und über Leitung 34 zur Regenerierung der Adsorber in der Adsorberstation A geführt. Nach der Adsorberregenerierung gelangt das Gas über Leitung 35 zur Druckwechseladsorptionsanlage DA, wird dort gereinigt und über Leitung 36 als H₂-Produkt abgegeben.

Das CO-haltige Restgas aus der Druckwechseladsorptionsanlage DA wird über Leitung 37 dem Verdichter C2 zugeführt, dort verdichtet und über Leitung 38 vor der CO₂-Wäsche W in das Synthesegas 1 eingeleitet.

Das vom Kopf der H₂-Strippkolonne T abgezogene sog. Flash-Gas besteht zum überwiegenden Teil aus Wasserstoff; wegen seines Kohlenmonoxidgehaltes weist es allerdings keine Produktreinheit auf. Über die Leitungen 39 und 40 gelangt es nacheinander zu den beiden Wärmetauschern E2 und E1, wo es angewärmt wird. Anschließend wird es über Leitung 41 dem Verdichter C2 als Zwischeneinspeisung aufgegeben und gemeinsam mit dem Restgas 37 aus der Druckwechseladsorptionsanlage DA über Leitung 38 in das Synthesegas 1 eingeleitet.

## Patentansprüche

1. Verfahren zur Gewinnung eines gasförmigen Kohlenmonoxidproduktstromes (19) durch Zerlegung eines vorwiegend aus Wasserstoff (H₂) und Kohlenmonoxid (CO) bestehenden Einsatzstoffstromes (3) in einer kryogenen Gaszerlegungseinheit mittels Abkühlung durch indirekten Wärmetausch (E1,E2) gegen anzuwärmende Verfahrensströme und einstufiger partieller Kondensation mit anschließender Tieftemperaturfraktionierung des bei der partiellen Kondensation gebildeten und in einem Abscheider (D1) von der H₂-reichen, CO-haltigen Gasfraktion (32) abgetrennten CO-reichen, H₂-haltigen Kondensats (10) in einer Trennkolonne (T), der Verdampfung und/oder Anwärmung der kalten Zerlegungsprodukte und der Verdichtung des gasförmigen CO auf Produktdruck mittels eines bevorzugt mehr als eine Verdichtersektion aufweisenden CO-Verdichters (C1), wobei das Flüssig-CO(11) aus dem Sumpf der Trennkolonne (T) abgezogen und kaskadenartig entspannt wird, wobei nach jeder Teilentspannung (a,b,c) der CO-Strom (14,21,27) in eine flüssige und eine gasförmige Fraktion getrennt (D2, D3, D4) und ein Teil der flüssigen Fraktion (20,26) zur nächsten Kaskadenstufe weitergeleitet und dort auf ein kleineres Druckniveau entspannt wird, während der andere Teil der flüssigen (15,22,28) und die gesamte gasförmige Fraktion (16,23,29) in zumindest einem Wärmetauscher (E1,E2) durch indirekten Wärmetausch gegen abzukühlende Verfahrensströme verdampft und angewärmt bzw. nur angewärmt und gasförmig dem CO-Verdichter (C1) oder direkt dem CO-Produktstrom zugeführt werden.

2. Verfahren nach Anspruch 1, **dadurch gekennzeichnet, dass** nur soviel Flüssig-CO (20,26) zu den Kaskadenstufen mit kleineren Druckniveaus geleitet wird, um die gewünschte Abkühlung des Einsatzstoffstromes zu erreichen.

3. Verfahren nach einem der Ansprüche 1 oder 2, **dadurch gekennzeichnet, dass** jeder der CO-Ströme (18,25,31) aus den Kaskadenstufen dem CO-Verdichter (C1) gasförmig an der Saugseite einer jeweils anderen Sektion aufgegeben wird und gleichzeitig jeder, der dem CO-Verdichter (C1) an der Saugseite einer Sektion aufgegebenen gasförmigen CO-Ströme (18,25,31), aus einer jeweils anderen Kaskadenstufe zugeführt wird.

4. Verfahren nach einem der Ansprüche 1 bis 3, **dadurch gekennzeichnet, dass** aus jeder der Stufen der Entspannungskaskade die flüssige CO-Fraktion (15,22,28) getrennt von der gasförmigen CO-Fraktion (16,23,29) zum kalten Ende eines Wärmetauschers (E2) geführt und im Wärmetausucher mit der gasförmigen CO-Fraktion (16,23,29) gemischt wird, bevor beide CO-Fraktionen in einer gemeinsamen Passage verdampft und/oder angewärmt werden.

5. Verfahren nach einem der Ansprüche 1 bis 4, **dadurch gekennzeichnet, dass** die während der partiellen Kondensation gebildete und von der CO-reichen, H₂-haltigen Flüssigfraktion (10) abgetrennte H₂-reiche und CO-haltige Gasfraktion (32) durch indirekten Wärmetausch (E2,E1) gegen abzukühlende Verfahrensströme angewärmt wird.

6. Verfahren nach einem der Ansprüche 1 bis 5, **dadurch gekennzeichnet, dass** die vom Kopf der Trennkolonne (T) abgezogene H₂-reiche, CO-haltige, gasförmige Fraktion (39) (Flash-Gas) durch indirekten Wärmetausch (E2,E1) gegen abzukühlende Verfahrensströme angewärmt wird.

7. Verfahren nach einem der Ansprüche 1 bis 6, **dadurch gekennzeichnet, dass** der Einsatzstoffstrom (3) für die kryogene Gaszerlegungseinheit aus einem Synthesegas (1) durch Reinigung in einer CO₂-Wäsche(W) und einer Adsorberstation (A) gewonnen wird.

8. Verfahren nach Anspruch 7, **dadurch gekennzeichnet, dass** zumindest ein Teil der während der einstufigen partiellen Kondensation gebildeten und von der CO-reichen, H₂-haltigen Flüssigfraktion (10) abgetrennten H₂-reichen und CO-haltigen Gasfraktion (32) aus dem Abscheider (D1) nach ihrer Anwärmung (34) zur Regenerierung der Adsorber in der Adsorberstation (A) verwendet wird.

9. Verfahren nach einem der Ansprüche 7 oder 8, **dadurch gekennzeichnet, dass** die gesamte Gasfraktion (32) aus dem Abscheider (D1) nach ihrer Anwärmung (34) in einer Membraneinheit in eine Wasserstofffraktion und ein CO/H₂-Gemisch (Retentat) aufgetrennt wird, bevor zumindest ein Teil der Wasserstofffraktion zur Regenerierung der Adsorber in der Adsorberstation (A) verwendet wird und das Retentat nach Abkühlung gegen anzuwärmende Verfahrensströme der Trennkolonne (T) zur Gewinnung des in ihr enthaltenen Kohlenmonoxids aufgegeben wird.

10. Verfahren nach einem der Ansprüche 7 bis 9, **dadurch gekennzeichnet, dass** das zur Regenerierung der Adsorber in der Adsorberstation (A) verwendete, und daher verunreinigte Gas (35) in einer Druckwechseladsorptionsanlage (DA) gereinigt und anschließend als Wasserstoffprodukt (36) an der Anlagengrenze abgegeben wird.

11. Verfahren nach Anspruch 10, **dadurch gekennzeichnet, dass** das Restgas (37) aus der Druckwechseladsorptionsanlage (DA) in das Synthesegas (1) vor der CO₂-Wäsche (W) zurückgeführt wird.

12. Verfahren nach einem der Ansprüche 1 bis 11, **dadurch gekennzeichnet, dass** zur Deckung von zumindest einem Teil des Kältebedarfs des Verfahrens flüssiger, Stickstoff (6) von jenseits der Anlagengrenzen zugeführt und gegen abzukühlende Verfahrensströme verdampft, angewärmt und anschließend in die Atmosphäre abgegeben wird (9).

13. Verfahren nach Anspruch 12, **dadurch gekennzeichnet, dass** der flüssige Stickstoff (6) in einem Wärmetauscher (E3) verdampft wird, der im Abscheider (D1) zur Trennung des bei der partiellen Kondensation des Einsatzstoffstromes (3) entstehenden Flüssigkeits-Gas-Gemisches(5) integriert ist, wodurch ein Teil des in der Gasfraktion enthaltenen CO auskondensiert wird.

14. Vorrichtung zur Gewinnung eines gasförmigen Kohlenmonoxidproduktes (19) durch Zerlegung eines vorwiegend aus Wasserstoff (H₂) und Kohlenmonoxid (CO) bestehenden Einsatzstoffstromes (3), bestehend aus einer kryogenen Gaszerlegungseinheit, die neben Leitungen zur Führung der Verfahrensströme zumindest einen Wärmetauscher (E1,E2), in dem der Einsatzstoffstrom (3) gegen anzuwärmende Verfahrensströme abgekühlt und partiell kondensiert wird, eine Trennkolonne (T), in der das bei der partiellen Kondensation gebildete und in einem Abscheider (D1) von der H₂-reichen, CO-haltigen Gasfraktion (32) abgetrennte CO-reiche, H₂-haltige Kondensat (10) einer Tieftemperaturfraktionierung unterzogen wird sowie einen bevorzugt mehr als eine Verdichtersektion aufweisenden CO-Verdichter (C1) zur Verdichtung des gasförmigem CO auf Produktdruck umfasst, wobei zwischen dem Sumpf der Trennkolonne (T), die vorzugsweise als H₂-Strippkolonne ausgeführt ist, und der kalten Seite des Wärmetauschers (E2) eine Einrichtung zur kaskadenartigen Entspannung des Flüssig-CO (11) aus dem Sumpf der Trennkolonne (T) vorgesehen ist, wobei die Stufen der Kaskade jeweils ein einstellbares Drosselorgan (a,b,c) und einen Abscheider (D2,D3,D4) zur Trennung, der bei der Entspannung des Flüssig-CO über das Drosselorgan (a,b,c) entstehenden Flüssigkeits-Gas-Gemisches(14,21,27) aufweisen, und die Stufen so verschaltet sind, dass ein Teil der Flüssigfraktion (20,26) aus dem Abscheider (D2,D3) zur nächsten Kaskadenstufe weiterleitbar ist, während der restliche Teil der Flüssigfraktion (15,22,28) und die gesamte Gasfraktion (16,23,29) dem Wärmetauscher (E2) bevorzugt auf seiner kalten Seite bei einem geeigneten Temperaturniveau zuführbar sind, wo sie gegen abzukühlende Verfahrensströme verdampft und angewärmt werden, bevor sie gasförming dem CO-Verdichter oder direkt dem CO-Produktstrom zugeführt werden.

15. Vorrichtung nach Anspruch 14, **dadurch gekennzeichnet, dass** die Entspannungskaskade aus wenigstens zwei, und maximal n+1 Kaskadenstufen besteht, wenn n die Anzahl der Sektionen des CO-Verdichters (C1) ist.

16. Vorrichtung nach einem der Ansprüche 14 oder 15, **dadurch gekennzeichnet, dass** der oder die Wärmetauscher (E1,E2) als Plattenwärmetauscher ausgeführt sind.

17. Vorrichtung nach einem der Ansprüche 14 bis 16, **dadurch gekennzeichnet, dass** sie zur Abtrennung des Wasserstoffs aus dem bei der partiellen Kondensation gebildeten H₂-reichen, CO-haltigen Gasgemisches (32) mit einer Membraneinheit, die nicht Teil der kryogenen Gaszerlegungseinheit ist, ausgestattet ist.

18. Vorrichtung nach einem der Ansprüche 14 bis 16, **dadurch gekennzeichnet, dass** sie zur Gewinnung eines Wasserstoffproduktes mit einer Druckwechseladsorptionsanlage (DA), die nicht Teil der kryogenen Gaszerlegungseinheit ist, versehen ist.

19. Vorrichtung nach einem der Ansprüche 14 bis 18, **dadurch gekennzeichnet, dass** der Abscheider (D1) zur Trennung des bei der einstufigen partiellen Kondensation gebildeten Flüssigkeits-Gas-Gemisches (5) mit einem Wärmetauscher (E3) versehen ist, der mit flüssigem Stickstoff (6) von jenseits der Anlagengrenze gekühlt wird.

20. Vorrichtung nach Anspruch 19, **dadurch gekennzeichnet, dass** es sich bei dem Wärmetauscher (E3) um einen gewickelten Wärmetauscher handelt.

21. Vorrichtung nach Anspruch 19, **dadurch gekennzeichnet, dass** es sich bei dem Wärmetauscher (E3) um einen Plattenwärmetauscher handelt.

## Claims

1. Process for the recovery of a gaseous carbon monoxide product stream (19) by fractionation of a feed stream (3) predominantly consisting of hydrogen (H₂) and carbon monoxide (CO) in a cryogenic gas fractionation unit by means of cooling by indirect heat exchange (E1, E2) against process streams to be warmed and single-stage partial condensation with subsequent low-temperature fractionation of the CO-rich, H₂-containing condensate (10) formed in the partial condensation and separated off in a separator (D1) from the H₂-rich, CO-containing gas fraction (32) in a separation column (T), vaporization and/or warming of the cold fractionation products and compression of the gaseous CO to product pressure by means of a CO compressor (C1) preferably having more than one compressor section, the liquid CO (11) being taken off from the bottom of the separation column (T) and expanded in a cascade, in which case after each partial expansion (a, b, c) the CO stream (14, 21, 27) is separated into a liquid fraction and a gaseous fraction (D2, D3, D4) and a part of the liquid fraction (20, 26) is passed on to the next cascade stage and there expanded to a lower pressure level, while the other part of the liquid fraction (15, 22, 28) and all of the gaseous fraction (16, 23, 29) are vaporized and warmed, or only warmed, in at least one heat exchanger (E1, E2) by indirect heat exchange against process streams to be cooled, and fed in the gaseous state to the CO compressor (C1) or directly to the CO product stream.

2. Process according to Claim 1, **characterized in that** only as much liquid CO (20, 26) is passed to the cascade stages of low pressure level in order to achieve the desired cooling of the feed stream.

3. Process according to one of Claims 1 or 2, **characterized in that** each of the CO streams (18, 25, 31) from the cascade stages is applied to the CO compressor (C1) in the gaseous state to the suction side of in each case another section, and simultaneously each of the gaseous CO streams (18, 25, 31) applied to the CO compressor (C1) at the suction side of a section is fed from in each case another cascade stage.

4. Process according to one of Claims 1 to 3, **characterized in that** from each of the stages of the expansion cascade, the liquid CO fraction (15, 22, 28) is passed separately from the gaseous CO fraction (16, 23, 29) to the cold end of a heat exchanger (E2) and is mixed with the gaseous CO fraction (16, 23, 29) in the heat exchanger before both CO fractions are vaporized and/or warmed in a shared passage.

5. Process according to one of Claims 1 to 4, **characterized in that** the H₂-rich and CO-containing gas fraction (32) formed during the partial condensation and separated off from the CO-rich, H₂-containing liquid fraction (10) is warmed by indirect heat exchange (E2, E1) against process streams to be cooled.

6. Process according to one of Claims 1 to 5, **characterized in that** the H₂-rich, CO-containing gaseous fraction (39) (flash gas) taken off from the top of the separation column (T) is warmed by indirect heat exchange (E2, E1) against process streams to be cooled.

7. Process according to one of Claims 1 to 6, **characterized in that** the feed stream (3) for the cryogenic gas fractionation unit is recovered from a synthesis gas (1) by purification in a CO₂ scrubber (W) and an adsorber station (A).

8. Process according to Claim 7, **characterized in that** at least a part of the H₂-rich and CO-containing gas fraction (32) from the separator (D1) which is formed during the single-stage partial condensation and separated off from the CO-rich, H₂-containing liquid fraction (10) is used, after its warming (34), for regenerating the adsorbers in the adsorber station (A).

9. Process according to one of Claims 7 or 8, **characterized in that** the entire gas fraction (32) from the separator (D1), after its warming (34) in a membrane unit, is separated into a hydrogen fraction and a CO/H₂ mixture (retentate), before at least a part of the hydrogen fraction is used for regenerating the adsorbers in the adsorber station (A), and the retentate, after cooling against process streams to be warmed, is applied to the separation column (T) for recovery of the carbon monoxide present in it.

10. Process according to one of Claims 7 to 9, **characterized in that** the gas (35) used for regeneration of the adsorbers in the adsorber station (A) and therefore contaminated is purified in a pressure swing adsorption unit (DA) and subsequently released as hydrogen product (36) at the plant boundary limits.

11. Process according to Claim 10, **characterized in that** the residual gas (37) from the pressure swing adsorption unit (DA) is recirculated to the synthesis gas (1) upstream of the CO₂ scrubber (W).

12. Process according to one of Claims 1 to 11; **characterized in that**, to cover at least a part of the refrigeration requirement of the process, liquid nitrogen (6) from outside the plant boundary limits is fed and vaporized and heated against process streams to be cooled and subsequently released (9) to the atmosphere.

13. Process according to Claim 12, **characterized in that** the liquid nitrogen (6) is vaporized in a heat exchanger (E3) which is integrated in the separator (D1) for separation of the liquid-gas mixture (5) formed in the partial condensation of the feed stream (3), as a result of which a part of the CO present in the gas fraction condenses out.

14. Device for the recovery of a gaseous carbon monoxide product (19) by fractionation of a feed stream (3) predominantly consisting of hydrogen (H₂) and carbon monoxide (CO), consisting of a cryogenic gas fractionation unit which, in addition to lines for feeding the process streams, comprises at least one heat exchanger (E1, E2) in which the feed stream (3) is cooled and partially condensed against process streams to be warmed, a separation column (T) in which the CO-rich, H₂-containing condensate (10) formed in the partial condensation and separated off from the H₂-rich, CO-containing gas fraction (32) in a separator (D1) is subjected to a low-temperature fractionation, and also a CO compressor (C1) preferably having more than one compressor section for compression of the gaseous CO to product pressure, where, between the bottom of the separation column (T) which is preferably constructed as an H₂-stripping column and the cold side of the heat exchanger (E2), a device is provided for cascade expansion of the liquid CO (11) from the bottom of the separation column (T), the stages of the cascade each having an adjustable throttling element (a, b, c) and a separator (D2, D3, D4) for separation of the liquid-gas mixture (14, 21, 27) formed in the expansion of the liquid CO via the throttling element (a, b, c), and the stages being connected in such a manner that a part of the liquid fraction (20, 26) can be passed on from the separator (D2, D3) to the next cascade stage, while the remaining part of the liquid fraction (15, 22, 28) and the entire gas fraction (16, 23, 29) can be fed to the heat exchanger (E2) preferably on its cold side at a suitable temperature level, where they are vaporized and warmed against process streams to be cooled, before they are fed in the gaseous state to the CO compressor or directly to the CO product stream.

15. Device according to Claim 14, **characterized in that** the expansion cascade consists of at least two, and at most n+1 cascade stages, when n is the number of sections of the CO compressor (C1).

16. Device according to one of Claims 14 or 15, **characterized in that** the heat exchanger or heat exchangers (E1, E2) is or are designed as plate heat exchangers.

17. Device according to one of Claims 14 to 16, **characterized in that** it is equipped with a membrane unit which is not part of the cryogenic gas fractionation unit to separate off the hydrogen from the H₂-rich, CO-containing gas mixture (32) formed in the partial condensation.

18. Device according to one of Claims 14 to 16, **characterized in that**; for recovery of a hydrogen product, it is equipped with a pressure swing adsorption unit (DA) which is not part of the cryogenic gas fractionation unit.

19. Device according to one of Claims 14 to 18, **characterized in that** the separator (D1), for separation of the liquid-gas mixture (5) formed in the single-stage partial condensation, is equipped with a heat exchanger (E3) which is cooled using liquid nitrogen (6) from outside the plant boundary limits.

20. Device according to Claim 19, **characterized in that** the heat exchanger (E3) is a helically coiled heat exchanger.

21. Device according to Claim 19, **characterized in that** the heat exchanger (E3) is a plate heat exchanger.

## Revendications

1. Procédé de récupération d'un courant produit de monoxyde de carbone gazeux (19) par décomposition d'un courant de matières premières (3) principalement constitué d'hydrogène (H₂) et de monoxyde de carbone (CO) dans une unité de décomposition de gaz cryogène par refroidissement par échange de chaleur indirect (E1, E2) contre des courants de procédé à chauffer et condensation partielle à une étape avec fractionnement à basse température ultérieur : du condensat riche en CO contenant de l'H₂ (10) formé pendant la condensation partielle et séparé dans un séparateur (D1) de la fraction gazeuse riche en H₂ contenant du CO (32) dans une colonne de séparation (T), évaporation et/ou chauffage des produits de décomposition froids et compression du CO gazeux à la pression du produit au moyen d'un compresseur de CO (C1) comprenant de préférence plus d'une section de compresseur, le CO liquide (11) étant soutiré au fond de la colonne de séparation (T) et détendu en cascade, le courant de CO (14, 21, 27) étant séparé en une fraction liquide et une fraction gazeuse (D2, D3, D4) après chaque détente partielle (a, b, c) et une partie de la fraction liquide (20, 26) étant transférée dans l'étape suivante de la cascade et détendue à un niveau de pression plus bas, tandis que l'autre partie de la fraction liquide (15, 22, 28) et la totalité de la fraction gazeuse (16, 23, 29) sont évaporées dans au moins un échangeur de chaleur (E1, E2) par échange de chaleur indirect contre des courants de procédé à refroidir et chauffées ou seulement chauffées et introduites sous forme gazeuse dans le compresseur de CO (C1) ou directement dans le courant produit de CO.

2. Procédé selon la revendication 1, **caractérisé en ce que** seulement assez de CO liquide (20, 26) pour obtenir le refroidissement souhaité du courant de matières premières est introduit dans les étapes de cascade ayant des niveaux de pression plus bas.

3. Procédé selon l'une quelconque des revendications 1 ou 2, **caractérisé en ce que** chacun des courants de CO (18, 25, 31) issus des étapes de cascade sont introduits dans le compresseur de CO (C1) sous forme gazeuse du côté de l'aspiration d'une section à chaque fois différente et, simultanément, chacun des courants de CO gazeux (18, 25, 31) introduits dans le compresseur de CO (C1) du côté de l'aspiration d'une section sont introduits à partir d'une étape de cascade à chaque fois différente.

4. Procédé selon l'une quelconque des revendications 1 à 3, **caractérisé en ce qu'**à partir de chacune des étapes de la cascade de détente, la fraction de CO liquide (15, 22, 28) est introduite séparément de la fraction de CO gazeuse (16, 23, 29) dans l'extrémité froide d'un échangeur de chaleur (E2), et mélangée dans l'échangeur de chaleur avec la fraction de CO gazeuse (16, 23, 29), avant que les deux fractions de CO soient évaporées et/ou chauffées dans un passage commun.

5. Procédé selon l'une quelconque des revendications 1 à 4, **caractérisé en ce que** la fraction gazeuse riche en H₂ et contenant du CO (32) formée pendant la condensation partielle et séparée de la fraction liquide riche en CO, contenant de l'H₂ (10) est chauffée par échange de chaleur indirect (E2, E1) contre des courants de procédé à refroidir.

6. Procédé selon l'une quelconque des revendications 1 à 5, **caractérisé en ce que** la fraction gazeuse riche en H₂ contenant du CO (39) (vapeur instantanée) soutirée à la tête de la colonne de séparation (T) est chauffée par échange de chaleur indirect (E2, E1) contre des courants de procédé à refroidir.

7. Procédé selon l'une quelconque des revendications 1 à 6, **caractérisé en ce que** le courant de matières premières (3) pour l'unité de décomposition de gaz cryogène (CB) est obtenu à partir d'un gaz de synthèse (1) par purification dans un épurateur de CO₂ (W) et une station d'adsorption (A).

8. Procédé selon la revendication 7, **caractérisé en ce qu'**au moins une partie de la fraction gazeuse riche en H₂ et contenant du CO (32) formée pendant la condensation partielle à une étape et séparée de la fraction liquide riche en CO, contenant de l'H₂ (10), issue du séparateur (D1), est utilisée après son chauffage (34) pour la régénération de l'adsorbeur dans la station d'adsorption (A).

9. Procédé selon l'une quelconque des revendications 7 ou 8, **caractérisé en ce que** la totalité de la fraction gazeuse (32) issue du séparateur (D1) est séparée après son chauffage (34) dans une unité à membrane en une fraction hydrogène et un mélange CO/H₂ (rétentat), avant qu'au moins une partie de la fraction hydrogène soit utilisée pour la régénération de l'adsorbeur dans la station d'adsorption (A) et que le rétentat soit introduit après refroidissement contre des courants de procédé à chauffer dans la colonne de séparation (T) pour récupérer le monoxyde de carbone qu'il contient.

10. Procédé selon l'une quelconque des revendications 7 à 9, **caractérisé en ce que** le gaz (35) utilisé pour la régénération de l'adsorbeur dans la station d'adsorption (A), et par conséquent contaminé, est purifié dans une unité d'adsorption modulée en pression (DA), puis déchargé sous la forme d'un produit hydrogène (36) à la limite de l'unité.

11. Procédé selon la revendication 10, **caractérisé en ce que** le gaz résiduel (37)- issu de l'unité d'adsorption modulée en pression (DA) est recyclé dans le gaz de synthèse (1) avant l'épuration du CO₂ (W).

12. Procédé selon l'une quelconque des revendications 1 à 11, **caractérisé en ce que** pour couvrir au moins une partie des besoins en froid du procédé, de l'azote liquide (6) est introduit depuis en-dehors des limites de l'unité et évaporé contre des courants de procédé à refroidir, chauffé, puis déchargé dans l'atmosphère (9).

13. Procédé selon la revendication 12, **caractérisé en ce que** l'azote liquide (6) est évaporé dans un échangeur de chaleur (E3), qui est intégré dans le séparateur (D1) pour la séparation du mélange liquide-gaz (5) formé lors de la condensation partielle du courant de matières premières (3), une partie du CO contenu dans la fraction gazeuse étant condensée.

14. Dispositif pour la récupération d'un produit monoxyde de carbone gazeux (19) par décomposition d'un courant de matières premières (3) principalement constitué d'hydrogène (H₂) et de monoxyde de carbone (CO), constitué par une unité de décomposition de gaz cryogène, qui, outre des conduites pour l'introduction des courants de procédé, comprend au moins un échangeur de chaleur (E1, E2) dans lequel le courant de matières premières (3) est refroidi et partiellement condensé contre des courants de procédé à chauffer, une colonne de séparation (T), dans laquelle le condensat riche en CO contenant de l'H₂ (10) formé pendant la condensation partielle et séparé dans un séparateur (D1) de la fraction gazeuse riche en H₂ contenant du CO (32) est soumis à un fractionnement à basse température, ainsi qu'un compresseur de CO (C1) comprenant de préférence plus d'une section de compresseur pour la compression du CO gazeux à la pression du produit, un appareil pour la détente en cascade du CO liquide (11) issu du fond de la colonne de séparation (T) étant prévu entre le fond de la colonne de séparation (T), qui est de préférence configurée sous la forme d'une colonne d'extraction d'H₂, et le côté froid de l'échangeur de chaleur (E2), les étapes de la cascade comprenant chacune un organe à étranglement ajustable (a, b, c) et un séparateur (D2, D3, D4) pour la séparation du mélange liquide-gaz (14, 21, 27) formé lors de la détente du CO liquide par l'organe à étranglement (a, b, c), et les étapes étant connectées de manière à ce qu'une partie de la fraction liquide (20, 26) issue du séparateur (D2, D3) puisse être transférée dans l'étape suivante de la cascade, tandis que la partie restante de la fraction liquide (15, 22, 28) et la totalité de la fraction gazeuse (16, 23, 29) puissent être introduites dans l'échangeur de chaleur (E2) de préférence de son côté froid à un niveau de température approprié, où elles sont évaporées et chauffées contre des courants de procédé à refroidir, avant d'être introduites sous forme gazeuse dans le compresseur de CO ou directement dans le courant de produit CO.

15. Dispositif selon la revendication 14, **caractérisé en ce que** la cascade de détente est constituée d'au moins 2 et d'au plus n+1 étapes de cascade, n'étant le nombre de sections du compresseur de CO (C1).

16. Dispositif selon l'une quelconque des revendications 14 ou 15, **caractérisé en ce que** le ou les échangeurs de chaleur (E1, E2) sont configurés sous la forme d'échangeurs de chaleur à plaques.

17. Dispositif selon l'une quelconque des revendications 14 à 16, **caractérisé en ce qu'**il est équipé pour la séparation de l'hydrogène du mélange gazeux riche en H₂, contenant du CO (32) formé pendant la condensation partielle d'une unité à membrane qui ne fait pas partie de l'unité de décomposition de gaz cryogène.

18. Dispositif selon l'une quelconque des revendications 14 à 16, **caractérisé en ce qu'**il est muni pour la récupération d'un produit hydrogène d'une unité d'adsorption modulée en pression (DA) qui ne fait pas partie de l'unité de décomposition de gaz cryogène.

19. Dispositif selon l'une quelconque des revendications 14 à 18, **caractérisé en ce que** le séparateur (D1) est muni pour la séparation du mélange liquide-gaz (5) formé pendant la condensation partielle à une étape d'un échangeur de chaleur (E3), qui est refroidi avec de l'azote liquide (6) provenant d'en-dehors de la limite de l'unité.

20. Dispositif selon la revendication 19, **caractérisé en ce que** l'échangeur de chaleur (E3) est un échangeur de chaleur enroulé.

21. Dispositif selon la revendication 19, **caractérisé en ce que** l'échangeur de chaleur (E3) est un échangeur de chaleur à plaques.
